# EUROPÄISCHE PATENTSCHRIFT

(11) **EP 0 583 750 B1**
(45) Veröffentlichungstag und Bekanntmachung des Hinweises auf die Patenterteilung: **26.02.1997**
(21) Anmeldenummer: 93112956.3
(22) Anmeldetag: 12.08.1993
(51) Int. Cl.: B62D 21/18

(54) **Lastfahrzeug**
Load-carrying vehicle
Véhicule pour le transport de charges

(30) Priorität: 14.08.1992 DE 9210890 U
(43) Veröffentlichungstag der Anmeldung: 23.02.1994
(73) Patentinhaber: ZEPPELIN MOBILE SYSTEME GmbH, D-77656 Offenburg (DE)
(72) Erfinder: Reichert, Edgar, D-51469 Bergisch-Gladbach (DE)
(74) Vertreter: Grünecker, Kinkeldey, Stockmair & Schwanhäusser Anwaltssozietät

(56) Entgegenhaltungen:
- DD-A- 157 405
- DE-A- 1 755 101
- DE-A- 2 534 155
- DE-A- 2 600 937
- DE-A- 2 949 232
- DE-A- 3 313 722
- DE-C- 2 716 994

## Beschreibung

Die Erfindung betrifft ein Lastfahrzeug mit einem biegesteifen, aber verwindungsweichen Fahrgestellrahmen, auf dem über einen Zwischenrahmen ein verwindungssteifer Aufbau angeordnet ist, der an seiner Unterseite ein sich in der Fahrzeuglängsmitte erstreckendes Zentralrohr aufweist, das an mehreren Punkten über Lager mit dem Zwischenrahmen verbunden ist.

Ein Fahrzeug dieser Art ist aus dem deutschen Patent DE-C-27 16 994 bekannt. Es hat sich in der Praxis bewährt und wurde vielfältig im unwegsamen Gelände eingesetzt.

In der DE-A-25 34 155 ist ein Lastkraftwagen offenbart, bei dem der Fahrzeugaufbau auf einem verwindungssteifen Zwischenrahmen befestigt ist. Dieser ist mit einem Fahrgestellrahmen an drei Punkten verbunden, von denen einer in der Längsmittellinie des Fahrzeugs angeordnet ist und deren andere beide Punkte die Eckpunkte der Basis eines gleichschenkligen Dreiecks bilden. Dabei ist der in der Längsmittellinie angeordnete Verbindungspunkt als Drehlager mit in Fahrzeuglängsachse verlaufender Drehachse ausgebildet.

Bei der aus der DE-C-27 16 994 bekannten Lösung, wird der verwindungssteife Aufbau über zwei Dreipunktlagerungen mit dem verwindungsfreien Zwischenrahmen verbunden. Hierdurch ergibt sich die Geländetauglichkeit des Fahrzeugs, hierin liegt aber auch der Grund für relativ hohe Herstellungskosten.

Der vorliegenden Erfindung liegt die Aufgabe zugrunde, bei Aufrechterhaltung der Geländetauglichkeit die Herstellungskosten zu verringern.

Erfindungsgemäß wird dies dadurch gelöst, daß der Zwischenrahmen biegesteif und verwindungsweich ausgeführt und zwischen ihm und dem Zentralrohr ein einziges Dreipunktlager vorhanden ist, das ein hinteres, in Axialrichtung festes Drehlager, dessen Drehachse sich in der Fahrzeuglängsmitte in Fahrzeugrichtung befindet, sowie an einer Traverse des Zentralrohres zwei seitliche Gleitlager umfaßt, die sphärische Lagerflächen aufweisen, denen am Zwischenrahmen horizontale Auflager zugeordnet sind.

Bei der Erfindung ist schon der Zwischenrahmen verwindungsweich, so daß er zwar eine Verstärkung des Fahrgestellrahmens darstellt, aber sich zusammen mit diesem verwindet. Der Zwischenrahmen dämpft die Verwindungsbewegungen ab und stellt ein elastisches Zwischenglied zum verwindungssteifen Aufbau dar.

Bei der Erfindung ist lediglich ein einziges Dreipunktlager vorhanden. Das hintere Drehlager dient in axialer Richtung als Festlager und nimmt also als einziges Lager alle in Fahrtrichtung erfolgenden Verzögerungen und Beschleunigungen auf.

Dem einzigen Drehlager des Zentralrohres sind zwei seitliche Gleitlager der Traverse vorgeordnet. Hierdurch ergibt sich die besagte einzige Dreipunktlagerung. Die Lagerflächen der Gleitlager sind sphärisch gestaltet, so daß sie einen Teil der Verwindungen zwischen Aufbau einerseits und Zwischenrahmen andererseits aufnehmen können. Sie ergänzen sich mit der Fesselung des Zentralrohres am hinteren Drehlager und bieten noch genügend Freiheit als Ausgleich für die beim rauhen Fahrbetrieb auftretenden Verwindungsbewegungen des Zwischenrahmens.

Bei einer vorteilhaften Weiterbildung der Erfindung ist vorgesehen, daß das Gleitlager einen im Querschnitt T-förmigen Lagerbock aufweist, dessen vertikaler T-Steg seitlich mit dem Zwischenrahmen verbunden ist und der fahrzeugnähere Abschnitt des horizontalen T-Balkens oben auf dem Zwischenrahmen aufliegt und das Auflager für die sphärische Lagerfläche bildet. Dieser Lagerbock hat mehrere Vorteile. Bedingt durch die T-Form ist er seitlich und vertikal ausreichend am Zwischenrahmen gesichert und kann bei entsprechend langer Gestaltung des T-Steges auch für einen zusätzlichen Zusammenhalt mit dem Fahrgestellrahmen sorgen.

Der fahrzeugnähere Abschnitt des T-Balkens bildet das Auflager für die sphärische Lagerfläche der Traverse.

Mit Vorteil ist der fahrzeugfernere Abschnitt des horizontalen T-Balkens tiefer angeordnet als der fahrzeugnähere und dient zur Aufnahme eines unter der Kraft einer Feder stehenden Ankers. Durch diese Abstufung wird das Auflager für die sphärische Lagerfläche der Traverse klar begrenzt.

Günstig ist es, wenn dem Lagerbock des Gleitlagers auf Seiten der Traverse eine Konsole zugeordnet ist, die an ihrer Unterseite die sphärische Lagerfläche trägt und an der Außenseite der Konsole womöglich noch der Anker angreift. Der Anker verwölbt die sphärische Lagerfläche elastisch durch seine Spannkraft und hält sie auch bei rauhem Betrieb in der gewünschten sphärischen Wölbung.

Die Konsole ist mit vertikalem spiel bezüglich des fahrzeugferneren Abschnitts des horizontalen T-Balkens des Lagerbockes angeordnet, aber auch seitliches spiel ist gegeben, wenn gemäß einer vorteilhaften Weiterbildung die Konsole im Querschnitt U-förmig gestaltet ist und beide U-Schenkel nach unten ragen, so daß sie den Lagerbock mit spiel seitlich übergreifen. Die seitlichen U-Schenkel bilden zwischen Aufbau und Zwischenrahmen einen seitlichen Anschlag für die Relativbewegung und begrenzen die Relativbewegung zwischen sphärischer Lagerfläche einerseits und Auflager andererseits.

Der Anker ist günstigerweise als Schraubbolzen ausgeführt, der durch Bohrungen der Konsole und des Lagerbocks hindurchgeführt ist und sich mit Hilfe einer Rechteckspiralfeder am Lagerbock oder an der Konsole abstützt. Die Rechteckspiralfeder hat den Vorteil, daß sie sich im vollständig zusammengedrückten Zustand aneinander abstützt und derartige große Belastungen aushält.

Nachfolgend wird die Erfindung anhand eines Ausführungsbeispiels beschrieben.

Es zeigen:

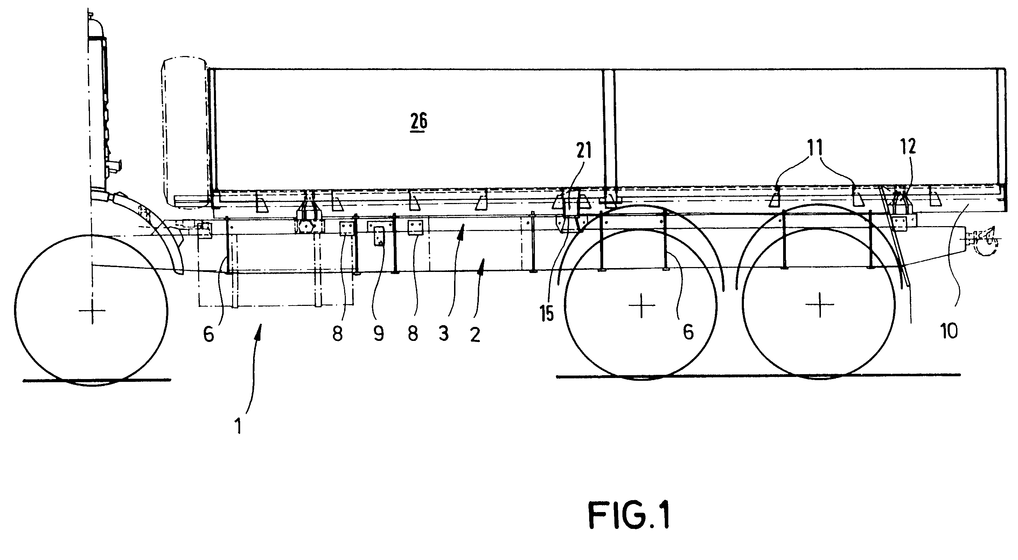

- Fig.1: eine Seitenansicht eines erfindungsgemäßen Lastfahrzeuges,

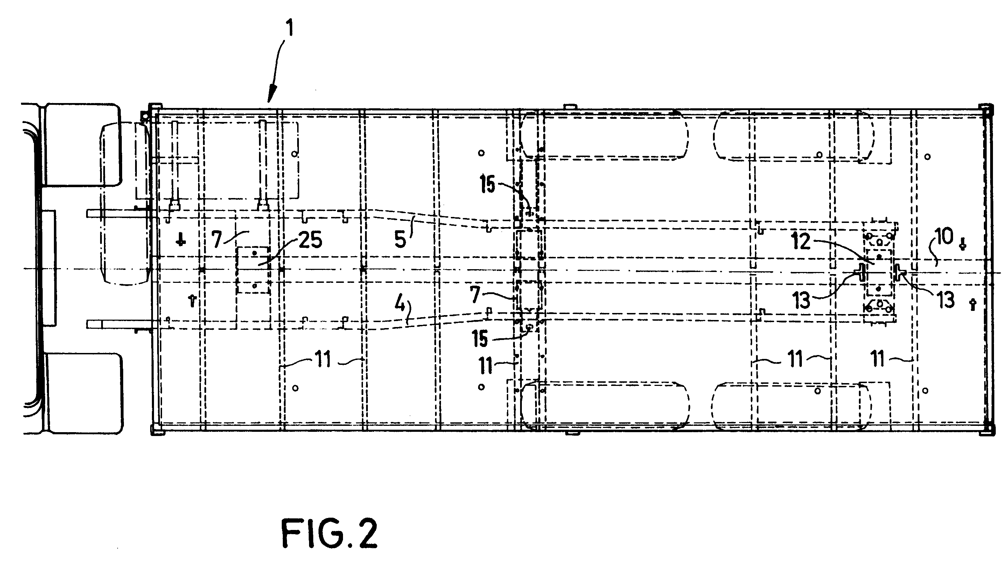

- Fig.2: die Draufsicht,
- Fig.3: einen Vertikalschnitt durch ein Gleitlager.

Das Lastfahrzeug 1 ist ein Dreiachser und verfügt über einen biegesteifen, jedoch verwindungsweichen handelsüblichen Fahrgestellrahmen 2. Er erstreckt sich im wesentlichen vom Fahrzeugmotor bis zum Fahrzeugheck und enthält zwei Längsträger.

Auf dem Ladebereich des Fahrgestellrahmens ist ein Zwischenrahmen 3 aufgelegt, der gleichfalls zwei Längsträger 4 und 5 umfaßt, die direkt und mit gleicher Linienführung über den Längsträgern des Fahrgestellrahmens angeordnet sind. Sie sind jedoch kürzer als die Längsträger des Fahrgestellrahmens und weisen eine geringere Höhe auf.

Sie werden vorteilhaft mit Briden 6 mit den Längsträgern des Fahrgestelltrahmens lösbar verbunden. Eine Anbindung über Lagerkonsolen entsprechend ausgebildet ist alternativ möglich. In Querrichtung werden sie über Querträger 7 auf Distanz gehalten.

Der Zwischenrahmen ist analog zum Fahrgestellrahmen biegesteif und verwindungsweich und kann sich gegenüber letzterem begrenzt verschieben und verwinden. Um ihn seitlich korrekt auf dem Fahrgestellrahmen zu halten sind seitliche Anschläge 8 vorhanden. Um den Verschiebeweg in Fahrzeuglängsrichtung zu begrenzen ist ein doppelt wirkender Axialanschlag 9 vorgesehen.

Das Lastfahrzeug 1 ist mit Hilfe des Fahrgestellrahmens 2 und des Zwischenrahmens 3 zur Aufnahme eines verwindungssteifen Aufbaus vorgesehen. Der Aufbau selbst kann mannigfaltig ausgebildet sein, er kann aus einer Pritsche 26, Container, Koffer usw. bestehen.

Als Bindeglied zwischen dem verwindungsweichem Zwischenrahmen und dem verwindungssteifem Aufbau dient ein Zentralrohr 10, das sich in der Fahrzeuglängsmitte in Fahrtrichtung erstreckt. Es weist mehrere zur Seite hin abstehende Traversen 11 auf, die mit der Unterseite des eigentlichen Aufbaus verbunden sind.

Das erfindungsgemäße Fahrzeug verfügt über eine einzige Dreipunktlagerung, um das Zentralrohr 10 mit dem Zwischenrahmen 3 zu verbinden. Im hinteren Fahrzeugbereich befindet sich ein einziges, hinteres Drehlager 12, um das sich das Zentralrohr um eine in der Fahrzeuglängsmitte in Fahrzeugrichtung befindliche Drehachse drehen kann. Dieses Lager ist in axialer Richtung ein Festlager. An der Außenfläche des Zentralrohres angeordnete T-förmige Stützrippen 13 dienen als Anschläge in Axialrichtung und legen deshalb das Zentralrohr in Richtung der Drehachse nach beiden Richtungen hin fest. Das Drehlager besteht aus Stahlguß und umfaßt eine im Querschnitt halbkreisförmige Lagerschale. Die Stützrippen sind mit Spiel zur Lagerschale angeordnet und stützen sich bei Verschiebung an dieser ab.

Das Zentralrohr ist innerhalb des Drehlagers 12 voll umfänglich gehalten, so daß auch bei vertikalen Stößen der Aufbau nicht vom Zwischenrahmen abhebt.

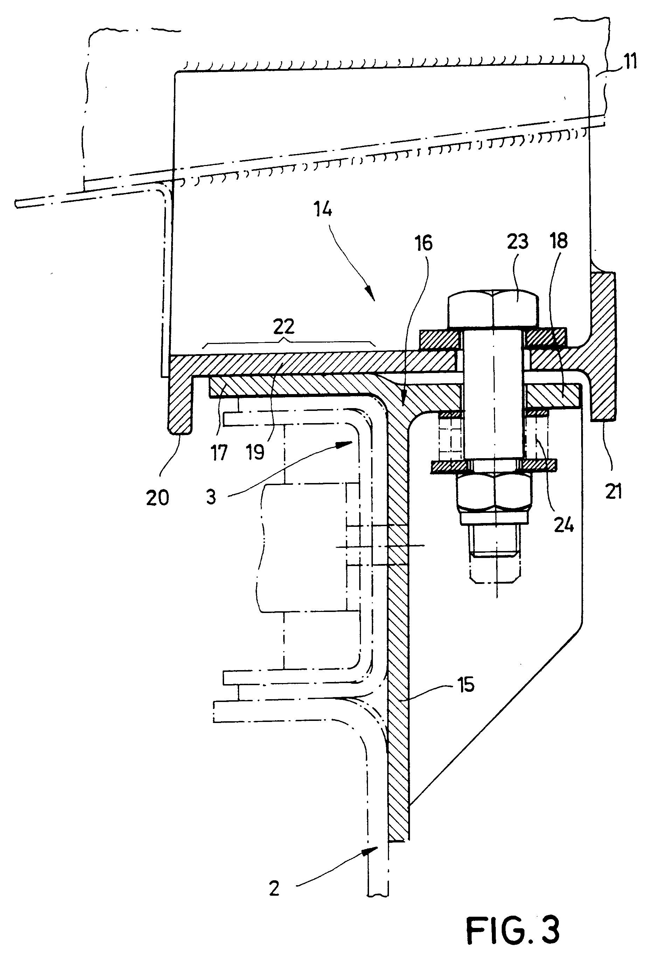

Das Dreipunktlager wird durch zwei seitliche Gleitlager 14 ergänzt. Deren Konstruktion geht insbesondere aus Figur 3 hervor.

Man erkennt einen Längsträger des Fahrgestellrahmens 2, sowie den darauf gelagerten Zwischenrahmen 3. Jedes Gleitlager besitzt einen im Querschnitt T-förmigen Lagerbock 15, dessen vertikaler T-Steg seitlich mit dem Zwischenrahmen 3 zum Beispiel durch Verschrauben verbunden ist. Der T-Steg ist in vertikaler Richtung so verlängert, daß er auch ein wenig mit dem Längsträger des Fahrgestellrahmens 2 überlappt, um bei Verwindung der beiden Rahmen für eine ausreichende seitliche Zuordnung zu sorgen.

Der horizontale T-Balken 16 ist in einen fahrzeugnäheren Abschnitt 17 und einen fahrzeugferneren Abschnitt 18 aufgeteilt. Letzterer ist etwas tiefer angesetzt als ersterer, um einen noch zu erklärenden Zwischenraum für ein darüber befindliche Konsole 19 zu schaffen und besitzt eine Bohrung für einen federbelasteten Anker 23.

Die Konsole 19 ist unterhalb zweier vom Zentralrohr 10 seitlich sich erstreckender Traversen 11 befestigt und im Querschnitt U-förmig. Beide U-Schenkel 20 und 21 ragen nach unten und übergreifen den Lagerbock 15 mit seitlichem Spiel.

Die Konsole verfügt im Überlappungsbereich mit dem fahrzeugnäheren Abschnitt 17 des Lagerbocks über eine sphärische Lagerfläche 22, die ballig aufliegt.

Im Bereich des fahrzeugferneren Abschnitts 18 ist ein Spalt zwischen der Konsole und diesem Abschnitt gegeben. Dort ist eine lösbare Verbindung zwischen der Konsole und dem Lagerbock in Form eines Schraubbolzens als Anker 23 vorhanden. In der Konsole befindet sich eine in Fahrzeuglängsrichtung erstreckendes Langloch, um einen Bewegungsausgleich für den Schraubbolzen zu ermöglichen. Der Schraubbolzen stützt sich mit seinem Kopf an der Oberseite der Konsole ab und ist mit seinem Gewinde nach unten gerichtet. Er hält die Konsole mittels einer Rechteckspiralfeder 24 mit Vorspannung auf dem Lagerbock. Darüberhinaus verwölbt der Schraubbolzen die Konsole und unterstützt ständig die elastische Verwölbung der sphärischen Lagerfläche 22.

Am Vorderende des Zwischenrahmens 3 ist auf Wunsch für die Begrenzung von außerordentlichen Verwindungsbewegungen eine U-förmige Stütze 25 für das Zentralrohr vorhanden, die es wenigstens teilweise umfaßt.

Die Erfindung ist nicht auf das gezeigte Ausführungsbeispiel beschränkt. Es ist insbesondere denkbar, bei den Gleitlagern die sphärischen Lagerflächen beim Lagerbock anzuordnen und statt dessen die Unterseite der Konsole eben zu gestalten.

## Patentansprüche

1. Lastfahrzeug (1) mit einem biegesteifen, aber verwindungsweichen Fahrgestellrahmen (2), auf dem über einen Zwischenrahmen (3) ein verwindungssteifer Aufbau angeordnet ist, der an seiner Unterseite ein sich in der Fahrzeuglängsmitte erstreckendes Zentralrohr aufweist, das an mehreren Punkten über Lager mit dem Zwischenrahmen verbunden ist,
**dadurch gekennzeichnet,**
daß der Zwischenrahmen (3) biegesteif und verwindungsweich ausgeführt und zwischen ihm und dem Zentralrohr (10) ein einziges Dreipunktlager vorhanden ist, das ein hinteres, in Axialrichtung festes Drehlager (12), dessen Drehachse sich in der Fahrzeuglängsmitte in Fahrzeugrichtung befindet, sowie an einer Traverse (11) des Zentralrohres (10) zwei seitliche Gleitlager (14) umfaßt, die sphärische Lagerflächen (22) aufweisen, denen im Zwischenrahmen (3) horizontale Auflager zugeordnet sind.

2. Lastfahrzeug nach Anspruch 1,
**dadurch gekennzeichnet,**
daß der Zwischenrahmen (3) auf dem Fahrgestellrahmen (2) längsverschieblich, jedoch in vertikaler Richtung unverrückbar gehalten ist.

3. Lastfahrzeug nach einem der vorherigen Ansprüche,
**dadurch gekennzeichnet,**
daß das Gleitlager (14) einen im Querschnitt T-förmigen Lagerbock (15) aufweist, dessen vertikaler T-Steg (15) seitlich mit dem Zwischenrahmen (3) verbunden ist und der fahrzeugnähere Abschnitt (17) des horizontalen T-Balkens (16) oben auf dem Zwischenrahmen (3) aufliegt und das Auflager für die sphärische Lagerfläche (22) bildet.

4. Lastfahrzeug nach Anspruch 1 oder 2,
**dadurch gekennzeichnet,**
daß der fahrzeugfernere Abschnitt (18) des horizontalen T-Balkens (16) tiefer liegt als der fahrzeugnähere Abschnitt (17) und zur Aufnahme eines unter der Kraft einer Feder stehenden Ankers (23) dient.

5. Lastfahrzeug nach einem der vorhergehenden Ansprüche
**dadurch gekennzeichnet,**
daß dem Lagerbock (15) des Gleitlagers (14) auf Seiten der Traverse (11) eine Konsole (19) zugeordnet ist, die an ihrer Unterseite die sphärische Lagerfläche (22) trägt.

6. Lastfahrzeug nach einem der vorhergehenden Ansprüche
**dadurch gekennzeichnet,**
daß die Konsole (19) im Querschnitt U-förmig gestaltet ist und beide U-Schenkel (20, 21) nach unten ragen und den Lagerbock (15) mit spiel seitlich übergreifen.

7. Lastfahrzeug nach einem der vorhergehenden Ansprüche,
**dadurch gekennzeichnet,**
daß der Anker (23) als durch Bohrungen der Konsole (19) und des Lagerbocks hindurchgeführter Schraubbolzen ausgeführt ist, der sich mit Hilfe einer Rechteckspiralfeder (24) am Lagerbock (15) oder an der Konsole (19) abstützt.

8. Lastfahrzeug nach einem der vorhergehenden Ansprüche,
**dadurch gekennzeichnet,**
daß das Drehlager (12) aus Stahlguß besteht und zur Aufnahme des Zentralrohres (10) eine im Querschnitt halbkreisförmige Lagerschale umfaßt, die zum Zwecke der axialen Festlegung beidseitig flankiert ist, von in Draufsicht T-förmigen, an der Außenfläche des Zentralrohres angeordneten Stützrippen (13).

## Claims

1. A lorry (1) having a bending-resistant but torsionally yielding chassis frame (2), on which a torsion-resistant body is mounted by way of an intermediate frame (3), the said body being provided on its underside with a central tube which extends along the longitudinal centre of the vehicle and which is connected to the intermediate frame at a plurality of points by way of bearings, **characterized in that** the intermediate frame (3) is made bending-resistant and torsionally yielding and a single three-point bearing is provided between the said intermediate frame (3) and the central tube (10), the said three-point bearing comprising a rear pivot bearing (12), which is fixed in the axial direction and the rotational axis of which is situated in the direction of the vehicle in the longitudinal centre of the vehicle, and - on a cross member (11) of the central tube (10) - two lateral sliding bearings (14) comprising spherical bearing surfaces (22) with which horizontal abutments are associated in the intermediate frame (3).

2. A lorry according to Claim 1, **characterized in that** the intermediate frame (3) is held longitudinally displaceably but vertically immovably on the chassis frame (2).

3. A lorry according to one of the preceding Claims, **characterized in that** the sliding bearing (14) has a bearing block (15) which is T-shaped in cross-section and the vertical T-web (15) of which is connected at the side to the intermediate frame (3), and the portion (17) of the horizontal T-bar (16) closer to the vehicle rests on the top of the intermediate frame (3) and forms the abutment for the spherical bearing face (22).

4. A lorry according to Claim 1 or 2, **characterized in that** the portion (18) of the horizon-. tal T-bar (16) further from the vehicle is situated at a lower level than the portion (17) closer to the vehicle and is used for receiving a tie bolt (23) acted upon by a spring.

5. A lorry according to one of the preceding Claims, **characterized in that** a bracket (19), which supports the spherical bearing face (22) on the underside thereof, is associated with the bearing block (15) of the sliding bearing (14) on the side of the cross member (11).

6. A lorry according to one of the preceding Claims, **characterized in that** the bracket (19) is made U-shaped in cross-section, and the two U-arms (20, 21) project downwards and engage over the bearing block (15) with clearance.

7. A lorry according to one of the preceding Claims, **characterized in tha**t the tie bolt (23) is constructed as a threaded bolt which is inserted through bores in the bracket (19) and the bearing block and which is supported on the bearing block (15) or on the bracket (19) with the aid of a rectangular spiral spring (24).

8. A lorry according to one of the preceding Claims, **characterized in that** the pivot bearing (12) consists of cast steel and, in order to receive the central tube (10), comprises a bearing shell which is semicircular in cross-section and which for the purpose of axial fastening is flanked on both sides by support ribs (13) which are T-shaped in plan view and which are arranged on the outer face of the central tube.

## Revendications

1. Véhicule pour le transport de charges (1) comportant un cadre de châssis (2) rigide en flexion mais souple en torsion, sur lequel, par un cadre intermédiaire (3), est placée une structure rigide en torsion, qui présente sur sa face intérieure un tube central s'étendant dans le milieu longitudinal du véhicule, qui est assemblé en plusieurs points, par des paliers, avec le cadre intermédiaire,
caractérisé
en ce que le cadre intermédiaire (3) est rigide en flexion et souple en torsion et entre celui-ci et le tube central (10) se trouve un seul palier à trois points, qui comprend un palier tournant (12) arrière, fixe dans la direction axiale, dont l'axe de rotation se trouve dans le milieu longitudinal du véhicule, dans la direction du véhicule, ainsi que sur une traverse (11) du tube central (10), deux paliers glissants (14) latéraux, qui comportent des surfaces de palier (22) sphériques, auxquelles sont associés dans le cadre intermédiaire (3), des supports horizontaux.

2. Véhicule de transport de charges selon la revendication 1,
caractérisé
en ce que le cadre intermédiaire (3) est maintenu de manière à coulisser longitudinalement sur le cadre de châssis (2), mais de manière à être immobilisé dans la direction verticale.

3. Véhicule de transport de charges selon l'une des revendications précédentes,
caractérisé
en ce que le palier glissant (14) présente un support d'appui (15) de section transversale en T, dont la branche verticale (15) du T est reliée latéralement au cadre intermédiaire (3) et la portion (17) proche du véhicule de la traverse horizontale (16) du T repose à la partie supérieur sur le cadre intermediaire (3) et forme le support pour la surface de palier (22) sphérique.

4. Véhicule de transport de charges selon la revendication 1 ou 2,
caractérisé
en ce que la portion (18) éloignée du véhicule de la traverse horizontale (16) du T se situe plus bas que la portion (17) proche du véhicule et sert à loger une ancre (23) se trouvant sous la forme d'un ressort.

5. Véhicule de transport de charges selon l'une des revendications précédentes,
caractérisé
en ce qu'au support d'appui (15) du palier glissant (14) est associée, sur les côtes de la traverse (11), une console (19) qui porte la surface de palier (22) sphérique, sur sa race intérieure.

6. Véhicule, de transport de charges selon l'une des revendications précédentes,
caractérisé,
en ce que la console (19) a une section transversale en U et les deux branches (20, 21) du U dépassent vers le bas et passent latéralement avec jeu sur le support d'appui (15).

7. Véhicule de transport de charges selon l'une des revendications précédentes,
caractérisé
en ce que l'ancre (23) est réalisée sous la forme d'un boulon traversant des perçages de la console (19) et du support d'appui, qui prend appui contre le support d'appui (15) ou contre la console (19), à l'aide d'un ressort spiral rectangulaire (24).

8. Véhicule de transport de charges selon l'une des revendications précédentes,
caractérisé
en ce que la palier tournant (12) est en fonte d'acier et comprend, pour loger le tube central (10), une coque de palier de section transversale semi-circulaire, qui en vue de la fixation axiale, est flanquée des deux côtés de nervures d'appui (13), en forme de T vues de dessus, placées sur la surface extérieure du tube central.
